# EUROPÄISCHE PATENTSCHRIFT

(11) **EP 3 143 425 B1**
(45) Veröffentlichungstag und Bekanntmachung des Hinweises auf die Patenterteilung: **05.07.2023**
(21) Anmeldenummer: 15710165.0
(22) Anmeldetag: 13.03.2015
(51) Int. Cl.: G01S 7/4915, G01S 17/32

(54) **MEHRZIELFÄHIGER LASERENTFERNUNGSMESSER**
LASER DISTANCE SENSOR WITH MULTI-TARGET CAPABILITY
CAPTEUR DE DISTANCE PAR LASER AVEC CAPACITÉ DE MULTI-CIBLES

(30) Priorität: 16.05.2014 DE 102014209375
(43) Veröffentlichungstag der Anmeldung: 22.03.2017
(73) Patentinhaber: Robert Bosch GmbH, 70442 Stuttgart (DE)
(72) Erfinder: SCHMIDTKE, Bernd, 71229 Leonberg (DE)
(86) Internationale Anmeldenummer: PCT/EP2015/055328
(87) Internationale Veröffentlichungsnummer: WO 2015/172911

(56) Entgegenhaltungen:
- EP-A1- 0 676 649
- EP-A1- 1 450 128
- WO-A1-94/18549
- CN-A- 102 650 689
- JP-A- 2008 107 286
- SAI BIN ET AL: "Advanced High Precision Radar Gauge for Industrial Applications", RADAR 2006 : PROCEEDINGS OF 2006 CIE INTERNATIONAL CONFERENCE ON RADAR ; OCT. 16 - 19, 2006, SHANGHAI, CHINA, IEEE OPERATIONS CENTER, PISCATAWAY, NJ, Bd. 1, 16. Oktober 2006 (2006-10-16), Seiten 463-466, XP002477789, DOI: 10.1109/ICR.2006.343173 ISBN: 978-0-7803-9582-4

## Beschreibung

### Stand der Technik

Die vorliegende Erfindung betrifft einen Laserentfernungsmesser zum Ermitteln einer Entfernung zu wenigstens einem Zielobjekt. Ferner betrifft die Erfindung ein Verfahren zum Betreiben eines Laserentfernungsmessers sowie ein hierfür angepasstes Computerprogrammprodukt und ein computerlesbares Medium.

Laserentfernungsmesser werden beispielsweise dazu eingesetzt, um einen Abstand zwischen dem Laserentfernungsmesser und einem Zielobjekt einfach, schnell und präzise bestimmen zu können. Hierzu sendet der Laserentfernungsmesser Licht hin zu dem Zielobjekt. Das Licht wird beispielsweise hinsichtlich seiner Intensität zeitlich moduliert. Ein Teil dieses Lichts wird von dem Zielobjekt zurück zu dem Laserentfernungsmesser reflektiert und kann dort von einem Lichtdetektor detektiert werden. Eine Laufzeit, die das Licht benötigt, um zu dem Zielobjekt und wieder zurück zum Laserentfernungsmesser zu gelangen, führt zu einer Phasenverschiebung zwischen ausgesendetem und detektiertem Licht. Durch geeignetes Messen dieser Phasenverschiebung kann daher die Laufzeit ermittelt und aufgrund der bekannten Lichtgeschwindigkeit somit auf die Entfernung des Zielobjekts zu dem Laserentfernungsmesser rückgeschlossen werden.

Herkömmliche Laserentfernungsmesser basieren meist auf dem Konzept der sogenannten Mischung, insbesondere der heterodynen Mischung. Unter dem Begriff "Mischung" kann eine Multiplikation eines zeitlich oszillierenden Messsignals mit einem ebenfalls zeitlich oszillierenden Referenzsignal verstanden werden, um ein Ausgangssignal zu erzeugen. Bei "homodyner Mischung" wird das Messsignal mit einem Referenzsignal gleicher Frequenz gemischt. Bei "heterodyner Mischung" wird das Messsignal mit einem Referenzsignal unterschiedlicher Frequenz gemischt, wobei der Frequenzunterschied typischerweise klein gegenüber der Frequenz des Messsignals ist.

Die Verwendung des Konzepts der Mischung kann dazu genutzt werden, ein Ausgangssignal zu erzeugen, dass mit einer wesentlich kleineren Frequenz oszilliert wie das Messsignal, wobei die Phasenverschiebung bezüglich der hohen Modulationsfrequenz erhalten bleibt. Das niederfrequente Ausgangssignal kann daher ohne Genauigkeitsverlust wesentlich einfacher detektiert und elektronisch ausgewertet werden. Allerdings kann es aufgrund von Tiefpassfilterung beim Mischen von Mess- und Referenzsignal nötig sein, vor einem Evaluieren des Ausgangssignals eine gewisse Zeit abzuwarten, bis sich das gemischte Ausgangssignal eingeschwungen und stabilisiert hat.

Aufgrund einer 2π-Periodizität der Phasenauswertung ist im Allgemeinen eine Verwendung mehrerer Modulationsfrequenzen zur Auflösung des damit verbundenen Eindeutigkeitsproblems erforderlich. Eindeutigkeitsprobleme treten bei Entfernungen größer als die Modulationswellenlänge auf. Mit Hilfe von Phasendifferenzen zu mehreren unterschiedlichen Modulationsfrequenzen kann durch einen mathematischen Abwicklungsalgorithmus und geeignete Wahl der Frequenzanzahl und der Frequenzen eindeutig auf die Entfernung eines weiter entfernten Ziels geschlossen werden.

Weiter können Eindeutigkeitsprobleme auch dadurch auftreten, dass signifikante Reflektionen an Zielen unterschiedlicher Entfernung im Messsignal vorhanden sind, d.h. dass Mehrfachreflektionen auftreten. Für den Fall einzelner weniger zusätzlicher Reflektionen bekannter Entfernung, die beispielsweise auch zu Referenzierungszwecken genutzt werden können, ergeben sich mathematisch Einschränkungen bezüglich Auswahl und Mindestanzahl der verwendeten Modulationsfrequenzen.

Aufgrund der endlichen Einschwingzeit der Tiefpassfilterung ergibt sich für die Anzahl der verwendeten Modulationsfrequenzen ein Optimum. Dieses Optimum stellt in der Regel einen Kompromiss zwischen der Robustheit des Abwicklungsalgorithmus gegenüber Mehrfachreflektionen und der Messzeit dar. Herkömmliche Laserentfernungsmesser werden beispielsweise in DE 10 2011 076 491, DE 10 2011 076 493 und DE 10 112 833 beschrieben.

In neueren Laserentfernungsmessern können sehr schnelle Lichtdetektoren und Elektroniken eingesetzt werden, um ein auf moduliertem Laserlicht basierendes Messsignal direkt synchron abtasten zu können. Unter dem Begriff "direkt synchrone Abtastung" ("direct synchronuous detection") kann hierbei eine zeitliche Abtastung eines modulierten Empfangssignals verstanden werden, wobei die Abtastung mit derselben Frequenz wie die Modulation des ausgesendeten Signals erfolgt. Die Abtastung ist mit der Modulation synchronisiert. Bei direkter synchroner Abtastung erfolgt keine Mischung mit einem Referenzsignal. Das Empfangssignal weist dabei gegenüber dem Sendesignal typischerweise eine Dämpfung und eine Laufzeitverzögerung auf.

Auf direkter synchroner Abtastung beruhende Laserentfernungsmesser sind beispielsweise in US 2007/0182949 A1 und DE 10 2009 029 372 beschrieben.

Die einleitend beschriebenen herkömmlichen Laserentfernungsmesser haben jedoch regelmäßig Probleme, gleichzeitig Entfernungen zu mehreren Zielobjekten zu bestimmen. Die Problematik wird insbesondere dann verschärft, wenn es um Mehrfachziele mit variablen Entfernungen geht. Mit anderen Worten fehlt ihnen im Allgemeinen eine Mehrzielfähigkeit. Zum Beispiel treten typischerweise Fehlfunktionen auf, wenn mit einem Laserentfernungsmesser ein Abstand zu einem Zielobjekt bestimmt werden soll und sich zwischen dem Laserentfernungsmesser und dem Zielobjekt beispielsweise eine Glasscheibe befindet, die das ausgesendete Laserlicht teilweise ebenso zurück zu dem Laserentfernungsmesser reflektiert wie das Zielobjekt. Aufgrund dieser zusätzlichen Rückreflektion kommt es regelmäßig zu einer Fehlinterpretation der rückreflektierten detektierten Laserstrahlung und somit zu falschen Entfernungsangaben.

Aus dem Stand der Technik sind bereits Laserentfernungsmesser mit einer allgemeinen Mehrzielfähigkeit bekannt, beispielsweise aus EP 1 450 128 A1, aus JP 2008 107286 A oder aus CN 102 650 689 A.

### Offenbarung der Erfindung

Ausführungsformen der vorliegenden Erfindung ermöglichen unter anderem einen Laserentfernungsmesser bzw. ein Verfahren zum Betreiben eines

Laserentfernungsmessers, bei dem eine allgemeine Mehrzielfähigkeit einfach, kostengünstig und/oder bei kurzen Messdauern erreicht werden kann oder bei denen Entfernungsmessungen auch bei Störeinflüssen durch zusätzliche Zielobjekte zuverlässig und genau möglich sind.

Gemäß einem ersten Aspekt der Erfindung wird ein Laserentfernungsmesser vorgeschlagen, der eine Laserlichtquelle, einen Lichtdetektor und eine Steuer- und Auswerteelektronik aufweist. Die Laserlichtquelle ist angepasst zum Aussenden von zeitlich moduliertem Laserlicht hin zu Zielobjekten. Der Lichtdetektor ist angepasst zum Detektieren von durch Zielobjekte reflektiertem Laserlicht und ist dazu ausgelegt, Laserlicht, welches mit Frequenzen im Bereich von 10 MHz bis 5 GHz, vorzugsweise 100 MHz bis 1,5 GHz moduliert ist, direkt synchron abzutasten. Die Steuer- und Auswerteelektronik ist angepasst zum Steuern der Laserlichtquelle und zum Auswerten von Signalen des Lichtdetektors. Der Laserentfernungsmesser zeichnet sich dadurch aus, dass die Steuer- und Auswerteelektronik dazu ausgelegt ist, folgende Verfahrensschritte auszuführen:
Ansteuern der Laserlichtquelle, um zeitlich moduliertes Laserlicht nacheinander bei einer Vielzahl M von wenigstens 20, vorzugsweise wenigstens 100, diskret verschiedenen Modulationsfrequenzen fₘ (m = 1 ... M) auszusenden und
Detektieren von durch Zielobjekte reflektiertem Laserlicht durch direktes synchrones Abtasten über eine Messzeitdauer Δt und Erzeugen eines Detektionssignals Iₘ bei jeder der Modulationsfrequenzen fₘ;
Durchführen einer inversen Fouriertransformation des Detektionssignals Iₘ, um ein Laufzeitspektrum Lₘ zu erzeugen; und
Evaluieren des Laufzeitspektrums Lₘ bezüglich Amplitudenwerten, um wenigstens eine Entfernung zwischen dem Laserentfernungsmesser und wenigstens einem der Zielobjekte grob zu ermitteln, wobei die Bestimmung der Entfernung D durch Evaluieren des Laufzeitspektrums bezüglich Phasenwerten verfeinert erfolgt, indem ein Nulldurchgang der Phasenwerte bestimmt wird.

Ausführungsformen der vorliegenden Erfindung können unter anderem als auf den nachfolgend beschriebenen Erkenntnissen und Ideen beruhend angesehen werden:
Wie einleitend beschrieben beruhen viele herkömmliche Laserentfernungsmesser auf dem Konzept der Mischung von Mess- und Referenzsignal, um keine hohen Anforderungen unter anderem an die Geschwindigkeit des Lichtdetektors und der Elektronik stellen zu müssen. Bei solchen Laserentfernungsmessern verbietet sich jedoch im Allgemeinen ein Aussenden von moduliertem Laserlicht als Messsignal bei einer Vielzahl von diskreten Frequenzen, da nach jedem Ändern der Modulationsfrequenz eine Einschwingzeit abgewartet werden muss und eine Gesamtmessdauer daher inakzeptabel lang werden kann. Um Entfernungen zu mehreren Zielobjekten gleichzeitig messen zu können erscheint es jedoch notwendig, Laufzeit-bedingte Phasenverschiebungen bei einer Mehrzahl von Modulationsfrequenzen zu messen, sodass eine Mehrzielfähigkeit bei solchen herkömmlichen Laserentfernungsmessern nicht möglich bzw. als mit inakzeptabel langen Messdauern verbunden zu sein schien.

In der EP 1 757 956 A1 ist ein mehrzielfähiges Distanzmessverfahren beschrieben, bei dem eine Berechnung von Distanzen auf einer Lösung eines statistischen Parameterschätzproblems beruht. Dieses Verfahren besitzt Einschränkungen hinsichtlich der maximalen Anzahl unterscheidbarer Ziele und ist motiviert von dem Wunsch, eine Anzahl verwendeter Modulationsfrequenzen zu minimieren und ist dadurch mathematisch anspruchsvoll.

Ausführungsformen des hierin beschriebenen Laserentfernungsmessers bzw. eines Verfahrens zum Betreiben eines solchen ermöglichen eine uneingeschränkte Mehrzielfähigkeit bei kurzen Messdauern und ohne eine Verwendung komplizierter und somit aufwändig zu implementierender mathematischer Algorithmen.

Es wurde nun erkannt, dass mithilfe moderner schneller Lichtdetektoren und Elektroniken, welche ein direktes synchrones Abtasten von durch Zielobjekte rückreflektiertem Licht ermöglichen, eine Mehrzielfähigkeit erreicht werden kann, indem eine Laufzeitverzögerung bei sehr vielen Modulationsfrequenzen gemessen wird und die Messergebnisse mithilfe von Fouriertransformationen geschickt ausgewertet werden. Dabei wurde als vorteilhaft erkannt, dass es bei einem direkten synchronen Abtasten typischerweise nicht zu den beim Mischen von Signalen üblichen langen Einschwingdauern kommt und somit trotz des vielfachen Änderns der Modulationsfrequenz eine Gesamtmessdauer kurz gehalten werden kann, da keine Tiefpassfilterung des Mischsignals erforderlich ist.

Bei dem vorgeschlagenen Laserentfernungsmesser bzw. dem darin durchgeführten Betriebsverfahren können Laufzeiten, die Laserlicht benötigt, um von dem Laserentfernungsmesser zu einem oder mehreren Zielobjekten und wieder zurück zu gelangen, bei einer Vielzahl von Modulationsfrequenzen gemessen werden. Beispielsweise können Detektionssignale Iₘ bei über 20 (d.h. m = 1, ... , M mit M > 20), vorzugsweise über 100 (M > 100) oder weiter bevorzugt bei mehreren Hundert (z.B. M > 500) verschiedenen diskreten Modulationsfrequenzen gemessen werden. Eine Reihenfolge der Modulationsfrequenzen und/oder ein Frequenzabstand zwischen den Modulationsfrequenzen können dabei beliebig sein, wobei, wie weiter unten beschrieben, eine äquidistante Beabstandung zwischen benachbarten Modulationsfrequenzen vorteilhaft sein kann. Der minimale Frequenzabstand limitiert im Allgemeinen die maximale Entfernung, die eindeutig bestimmt werden kann. Der gesamte durchstimmbare Frequenzbereich limitiert den minimalen Abstand mit dem Ziele an unterschiedlichen Orten aufgelöst werden können. Aus einem Empfangssignal P_{n,m} kann dabei z.B. in einem Vorverarbeitungsschritt das Detektionssignal Iₘ berechnet werden. Das Empfangssignal P_{n,m} kann dabei an N Stellen abgetastet werden, wobei diese zeitliche Abtastung für jedes der bei den M Modulationsfrequenzen erfassten Empfangssignale durchgeführt wird.

In einer einfachsten Ausführung kann ein für eine Weiterverarbeitung verwendetes Detektionssignal Iₘ beispielsweise einfach direkt aus dem ersten der N Abtastwerte des Empfangssignals, d.h. Iₘ = P_{1,m} bestehen. Weiter kann zusätzlich jeder der N Abtastwerte zur Verbesserung des Signal-Rausch-Verhältnisses herangezogen werden. Möglicher Nachteil dieser einfachen Ausführung kann sein, dass höhere Harmonische im Empfangssignal aufgrund einer möglicherweise nicht sinusförmigen Pulsform des modulierten Signals im Detektionssignal erhalten bleiben und störend wirken können.

Das Detektionssignal Iₘ wird dann in einer, inversen Fouriertransformation zurück in den Zeitraum transformiert und dadurch kann ein Laufzeitspektrum Lₘ des Sendesignals über die Verzögerungsstrecke erhalten werden. Dieses Laufzeitspektrum wird abschließend mit hoher Genauigkeit hinsichtlich

Amplitude und/oder Phase ausgewertet. Mit Hilfe der Lichtgeschwindigkeit können daraus Entfernungen zu einem oder auch mehreren Zielobjekten durch Analyse der Amplitude bzw. der Phase schnell und mit hoher Präzision ermittelt werden.

Gemäß einer Ausführungsform werden beim Evaluieren des Laufzeitspektrums Lₘ mehrere Entfernungen zwischen dem Laserdistanzmesser und jeweils einem von mehreren der Zielobjekte ermittelt. Mit anderen Worten wird eine Mehrzielfähigkeit ermöglicht und genutzt. Dabei wird genutzt, dass das verfahrensgemäß generierte Laufzeitspektrum detaillierte Informationen über die Entfernungen aller Zielobjekte, die Teile des ausgesendeten Laserlichts reflektieren, enthält und einfach und präzise ausgewertet werden kann.

Gemäß einer Ausführungsform sind die Modulationsfrequenzen fₘ äquidistant beabstandet. Mit anderen Worten ist die Differenz zwischen zwei benachbarten Modulationsfrequenzen für alle Modulationsfrequenzen gleich. Dies kann Fouriertransformationen bzw. eine Auswertung von deren Resultaten erheblich erleichtern.

Beispielsweise kann bei einer Gesamtmessung die Modulationsfrequenz innerhalb eines Gesamtbereichs von 400 MHz bis 1000 MHz 601 Mal mit äquidistanten Frequenzabständen von 1 MHz variiert werden.

Gemäß einer Ausführungsform wird zur Berechnung des Detektionssignals Iₘ bezüglich des Empfangssignals P_{n,m} eine digitale Filterung durchgeführt. Hierzu können die Detektionssignale Iₘ als Fouriertransformation des zeitlich abgetasteten Empfangssignals berechnet werden und der Realteil und/oder der Imaginärteil nur oder zumindest im Wesentlichen nur der Grundharmonischen der Modulationsfrequenz verwendet werden.

Mit anderen Worten werden die Detektionssignale bezüglich höher-harmonischer Anteile gefiltert, indem bei der Fouriertransformation lediglich der Anteil der Grundharmonischen berücksichtigt wird. Die auf diese Weise gefilterten Signale sind im Wesentlichen frei von Spektralbeiträgen höherer Harmonischer, d.h. frei von Spektralbeiträgen 2, ..., N/2, wie sie gegebenenfalls durch eine nicht rein sinusförmige Pulsform der modulierten Laserlichtsignale im ungefilterten Detektionssignal vorhanden sein können. Durch ein Herausfiltern höher-harmonischer Anteile aus den Detektionssignalen können beispielsweise Messfehler und/oder Mehrdeutigkeiten in Messergebnissen vermieden werden.

Es wird eine grobe Entfernungsbestimmung durch Evaluieren des Laufzeitspektrums bezüglich Amplitudenwerten durchgeführt. Hierzu können im Laufzeitspektrum beispielsweise Positionen von Maxima oder Peaks bestimmt und hieraus jeweils eine zugehörige Entfernung abgeleitet werden. Auch eine Trennung von Reflexionen unterschiedlich weit entfernter Zielobjekte kann durch Analyse von Amplituden in dem Laufzeitspektrum erfolgen.

Es wird eine verfeinerte Entfernungsbestimmung durch Evaluieren des Laufzeitspektrums bezüglich Phasenwerten durchgeführt, indem ein Nulldurchgang der Phasenwerte bestimmt wird. Insbesondere kann der Nulldurchgang der Phasenwerte an Stellen des Laufzeitspektrums bestimmt werden, an denen die Amplitudenwerte in Form eines Peaks signifikant über einer Rauschamplitude liegen. Benachbarte Stützstellen der Phasenwerte können beispielsweise unter Kenntnis einer Phasen-Steigung über eine Laufzeit abgewickelt werden. Die genannten Maßnahmen können einzeln oder in Kombinationen dazu genutzt werden, um die Entfernungen eines oder insbesondere mehrerer Zielobjekte sehr präzise anhand des Laufzeitspektrums ermitteln zu können.

Gemäß einer Ausführungsform weist der Lichtdetektor des Laserentfernungsmessers wenigstens eine SPAD (Single Photon Avalanche Diode) oder ein Array von SPADs auf. SPADs können modulierte Intensitätsvariationen in empfangenem Laserlicht mit einer sehr hohen zeitlichen Auflösung detektieren und eignen sich daher gut für die Umsetzung des hierin beschriebenen Verfahrens. Alternativ können auch andere schnelle Lichtdetektoren wie zum Beispiel CMOS/CCD-basierte Detektoren (photo gate) eingesetzt werden.

Der hierin beschriebene Laserentfernungsmesser kann auch dadurch implementiert werden, dass ein mit ausreichend schnellen Komponenten versehener Laserentfernungsmesser hinsichtlich seiner Steuer- und Auswerteelektronik geeignet derart angepasst wird, dass er die zuvor beschriebenen Verfahrensschritte durchführt, um auf diese Weise eine verbesserte Entfernungsbestimmung und/oder eine Mehrzielfähigkeit zu erreichen.

Hierzu kann beispielsweise ein mit einer programmierbaren Auswerte- und Steuerelektronik versehener Laserentfernungsmesser mittels eines geeignet angepassten Computerprogrammprodukts dazu programmiert werden, die genannten Verfahrensschritte durchzuführen. Das Computerprogrammprodukt kann hierfür auf einem maschinenlesbaren Medium wie beispielsweise einer CD, DVD oder einem Flashspeicher gespeichert sein oder über das Internet zur Verfügung gestellt werden. Alternativ kann auch ein geeignet ausgebildeter DSP (digital signal processor) implementiert werden.

Zusammenfassend können Aspekte und Ausführungsformen der Erfindung und deren mögliche Merkmale und Vorteile wie folgt dargestellt werden:
Bei bisherigen auf Mischung und Phasenmessung mit unterschiedlichen Modulationsfrequenzen basierenden Abstandsmessverfahren wird typischerweise nur mit einem sinnvoll ausgewählten Satz weniger einzelner Modulationsfrequenzen gemessen, um größere Zeitverluste durch typischerweise lange Einschwingzeiten zu vermeiden. Nachteil hierbei ist, dass eine Mehrzielfähigkeit nicht oder nur mit erheblichem mathematischem Aufwand erreicht werden kann.

Es werden daher ein weiterentwickelter Laserentfernungsmesser sowie ein Verfahren zum Betreiben desselben vorgeschlagen. Dabei wird rückreflektiertes Laserlicht direkt synchron abgetastet bei fester Modulationsfrequenz über eine vorgegebene Messdauer. Optional wird ein digitaler Filter als Vorverarbeitungsschritt zur Elimination höherer Harmonischer angewendet. Modulationsfrequenzen werden in diskreten Schritten variiert, vorzugsweise in äquidistanten Schritten. Es wird eine Spektralanalyse des zu den diskreten Modulationsfrequenzen abgetasteten und gegebenenfalls durch den Vorverarbeitungsschritt digital gefilterten Signals zur Bestimmung des Laufzeitspektrums und damit zur Entfernungsmessung gegebenenfalls mehrerer Ziele durchgeführt. Es findet dann eine Phasenauswertung des Laufzeitspektrums durch Bestimmung eines Phasennulldurchgangs zur Erhöhung der Genauigkeit statt. Optional können als Lichtdetektoren ein oder mehrere SPADs eingesetzt werden.

Das hier beschriebene Verfahren und ein entsprechend ausgestalteter Laserentfernungsmesser können das einfache Messverfahren direkt synchroner Abtastung auf eine Mehrzielfähigkeit hin erweitern. Dies wird ermöglicht durch eine Verwendung einer Vielzahl von Modulationsfrequenzen mit vorzugsweise äquidistantem Abstand und eine optionale Anwendung eines digitalen Filters als Vorverarbeitungsschritt. Die Anwendung eines digitalen Filters erlaubt eine Unterdrückung von nächsthöheren Harmonischen für eine weitere Signalverarbeitung durch Spektralzerlegung, die ansonsten stören wirken würden.

Durch das mögliche Erreichen einer Mehrzielfähigkeit kann für den Laserentfernungsmesser vorteilhaft erreicht werden, eine Abstandsmessung zu einem Zielobjekt zum Beispiel durch eine teilweise reflektierende Glasscheibe hindurch durchführen zu können. Ferner kann im Rahmen einer Fehlererkennung detektiert werden, das unerwünschte Störreflexionen vorhanden sind. Eine benötigte Messdauer kann gering gehalten werden. Ein kollinearer optischer Aufbau und damit weitere Vorteile können realisiert werden.

Ein weiterer Vorteil des hier beschriebenen Laserentfernungsmessverfahrens mit allgemeiner Mehrzielfähigkeit besteht darin, dass durch optisch transparente Medien mit verschiedenen Brechungsindizes hindurch gemessen werden kann. Es können Reflektionen an den Grenzschichten sowie optische Weglängen zwischen den Grenzschichten detektiert werden. Dies kann beispielsweise für Messaufgaben wie z.B. die Bestimmung von Füllständen in Flüssigkeitstanks oder ähnlichem von Vorteil sein.

Dabei kann beispielsweise ein Laserentfernungsmesser derart eingesetzt werden, dass ein von ihm ausgesendeter Laserstrahl bei einer Messung ein Medium durchläuft, dessen Brechungsindex sich von demjenigen von Luft unterscheidet. Aufgrund der hierbei an Grenzflächen unvermeidlich auftretenden Teilreflexionen kann erkannt werden, dass der Laserstrahl beispielsweise ab einer bestimmten Position innerhalb des gesamten durchstrahlten Weges durch ein optisch dichteres Medium verläuft. Es kann somit bei dort bekanntem Brechungsindex beispielsweise auf einen Füllstand in einem Speicher rückgeschlossen werden.

Es wird darauf hingewiesen, dass mögliche Merkmale und Vorteile von Ausführungsformen der Erfindung hierin teilweise mit Bezug auf einen Laserentfernungsmesser und teilweise mit Bezug auf ein Verfahren zum Betreiben desselben beschrieben sind.

### Kurze Beschreibung der Zeichnungen

Nachfolgend werden Ausführungsformen der Erfindung unter Bezugnahme auf die beigefügten Zeichnungen beschrieben, wobei weder die Beschreibung noch die Zeichnungen als die Erfindung einschränkend auszulegen sind.
Fig. 1 zeigt einen Laserentfernungsmesser gemäß einer Ausführungsform der vorliegenden Erfindung.
Fig. 2 zeigt ein Flussdiagramm von in einem erfindungsgemäßen Laserentfernungsmesser durchzuführenden Verfahrensschritten.
Fig. 3 veranschaulicht eine Amplitudenauswertung eines mit einem erfindungsgemäßen Laserentfernungsmesser aufgenommenen Laufzeitspektrums.
Fig. 4 veranschaulicht eine Phasenauswertung eines mit einem erfindungsgemäßen Laserentfernungsmesser aufgenommenen Laufzeitspektrums.

Die Figuren sind lediglich schematisch und nicht maßstabsgetreu. Gleiche Bezugszeichen bezeichnen in den verschiedenen Figuren gleiche oder ähnliche Merkmale.

### Ausführungsformen der Erfindung

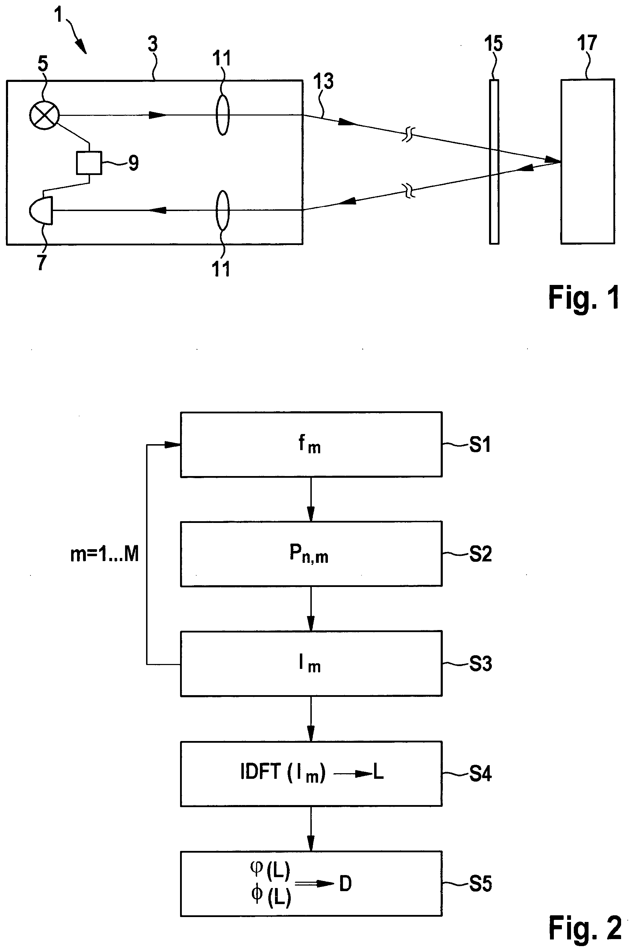

Fig. 1 zeigt einen Laserentfernungsmesser 1 gemäß einer Ausführungsform der vorliegenden Erfindung. Aufgenommen in einem gemeinsamen Gehäuse 3 umfasst der Laserentfernungsmesser 1 eine Laserlichtquelle 5 wie beispielsweise eine Laserdiode, einen Lichtdetektor 7 wie beispielsweise eine SPAD oder ein Array von SPADs sowie eine Steuer- und Auswerteelektronik 9. Der Laserentfernungsmesser 1 kann ferner eine oder mehrere Optiken 11 aufweisen, um einen von der Laserlichtquelle 5 emittierten Laserlichtstrahl 13 zu fokussieren, auf ein oder mehrere Zielobjekte 15, 17 zu richten und/oder rückreflektiertes Licht auf eine Detektionsfläche des Lichtdetektors 7 zu leiten. Der Laserentfernungsmesser 1 kann insbesondere ausreichend klein und kompakt konstruiert sein, um als handgehaltenes Gerät benutzt werden zu können.

Nachfolgend wird beispielhaft ein Verfahren beschrieben, wie der Laserentfernungsmesser 1 durch eine geeignet angepasste Steuer- und Auswerteelektronik 9 betrieben werden kann. Dabei wird Bezug genommen auf die in Fig. 2 als Flussdiagramm dargestellten Verfahrensabläufe und Verfahrensschritte S1 bis S5.

Um eine Entfernung zwischen dem Laserentfernungsmesser 1 und den Zielobjekten 15, 17 messen zu können, sendet der Laserentfernungsmesser 1 ein Sendesignal in Form eines von der Laserlichtquelle 5 emittierten Laserlichtstrahls 13 hin zu den Zielobjekten 15, 17 und detektiert mithilfe des Lichtdetektors 7 rückreflektiertes Licht als Empfangssignal.

Um die hierbei von dem Laserlichtstrahl 13 benötigte Laufzeit bestimmen zu können, wir der Laserlichtstrahl 13 beispielsweise hinsichtlich seiner Leistung zeitlich moduliert, typischerweise mit einer Modulationsfrequenz fₘ im Bereich von 100 bis 1500 MHz (Schritt S1). Da das Empfangssignal Laufzeitverzögerungen und Leistungsdämpfungen entsprechend der Lichtausbreitungseigenschaften über der Verzögerungsstrecke beinhaltet, kann eine Laufzeit-bedingte Phasenverzögerung zwischen dem ausgesendeten und dem detektierten rückreflektierten Licht gemessen werden und hieraus die Entfernung zu den Zielobjekten ermittelt werden.

Zu gegebener Modulationsfrequenz fₘ wird das Empfangssignal P über eine Messzeitdauer Δt direkt synchron abgetastet (Schritt S2). Das bedeutet, dass die Abtastung direkt, d.h. ohne Frequenzkonvertierung durch Mischung, und synchron mit der Modulation des Sendesignals, d.h. auf derselben Zeitbasis, erfolgt.

Der Lichtdetektor 7 und die Steuer- und Auswerteelektronik 9 ermöglichen aufgrund Ihrer technischen bzw. physikalischen Eigenschaften ein gewisses Abtastzeitintervall. Mit einer durch dieses Abtastzeitintervall gegebenen zeitlichen Auflösung δt ergeben sich N = fₘ * δt Abtastwerte pro Modulationsperiode des Sendesignals. Die N Abtastwerte pro Modulationsperiode werden zyklisch über N_{period} = Δt / (N * δt) Modulationsperioden aufkumuliert. N_{period} ist hierbei nicht notwendigerweise ganzzahlig. Ein Resultat P_{n,m} nach der Messzeit Δt besteht somit aus den N aufkumulierten Abtastwerten des Empfangssignals über der Zeit zur gegebenen Modulationsfrequenz fₘ. Der Frequenzindex m nimmt dabei diskrete Werte von 1 bis M an. Der Zeitindex n nimmt diskrete Werte von 1 bis N an.

In einer einfachsten Ausführung besteht das für die Weiterverarbeitung verwendete Detektionssignal Iₘ beispielsweise einfach direkt aus dem ersten der N Abtastwerte des Empfangssignals, d.h. Iₘ = P_{1,m}. Weiter kann zusätzlich jeder der N Abtastwerte zur Verbesserung des Signal-Rausch-Verhältnisses herangezogen werden. Nachteil dieser einfachen Ausführung kann sein, dass höhere Harmonische im Empfangssignal aufgrund nicht sinusförmiger Pulsform des modulierten Signals im Detektionssignal erhalten bleiben und störend wirken können.

Vorteilhafterweise, aber optional, erfolgt daher die Berechnung von Iₘ durch Anwendung eines digitalen Filters (Schritt S3). Der digitale Filter kann in einfachster Weise im Rahmen einer diskreten Fouriertransformation der N Abtastwerte im Zeitbereich realisiert werden. Als Resultat ergibt sich ein Fourierspektrum zu gegebener Modulationsfrequenz fₘ bestehend aus N/2 Phasenvektoren zu N zeitlichen Abtastwerten. Das Detektionssignal Iₘ wird nur aus dem Real- und/oder dem Imaginärteil des Phasenvektors der Grundharmonischen berechnet. Das auf diese Weise digital gefilterte Detektionssignal ist weitestgehend frei von den Spektral beiträgen 2, ..., N/2, die gegebenenfalls durch eine nicht rein sinusförmige Pulsform des modulierten Sendesignals im ungefilterten Signal vorhanden sein können.

Der bis hier beschriebene Prozess wird nun für M Modulationsfrequenzen sequentiell nacheinander durchgeführt, wobei die Reihenfolge der Modulationsfrequenzen beliebig gewählt werden kann. Das Resultat ist ein Detektionssignal Iₘ zu M diskreten Modulationsfrequenzen (m = 1... M).

Eine inverse Fouriertransformation IDFTₘ des Detektionssignals über die Modulationsfrequenz Iₘ zurück in den Zeitraum ergibt ein Laufzeitspektrum Lₘ des Sendesignals über der Verzögerungsstrecke (Schritt S4).

Dieses komplexe Laufzeitspektrum Lₘ wird im Rahmen einer Abstandsbestimmung D (Schritt S5) sowohl hinsichtlich der Amplitude als auch hinsichtlich der Phase zur Erreichung höherer Genauigkeit ausgewertet.

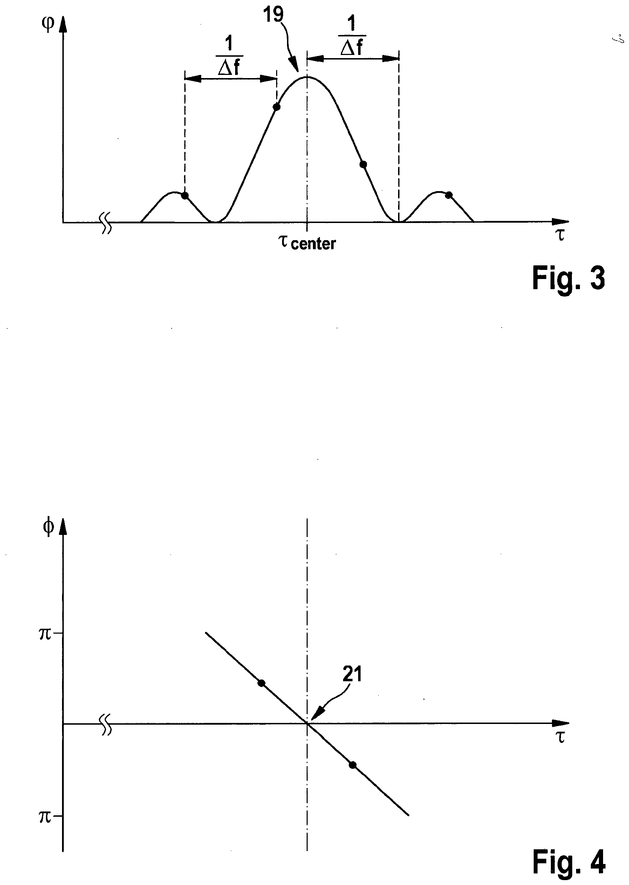

Eine grobe Abstandsbestimmung D und auch eine Trennung von Reflektionen unterschiedlich weit entfernter Ziele können durch Analyse von Amplitudenwerten ρₘ des Laufzeitspektrums Lₘ erfolgen. Wie in Figur 3 dargestellt kann hierzu beispielsweise die Position eines Maximums 19 der Amplitudenwerte bestimmt werden. Es können insbesondere auch komplexere aus der Signalverarbeitung bekannte Methoden zur Auswertung der Amplitude verwendet werden, z.B. Schwerpunktsbestimmung oder auch ein Hüllkurvenfit mit Berücksichtigung der Transferfunktion.

Eine genauere Abstandsbestimmung D erfolgt anhand einer Phasenauswertung. Hierzu wird, wie in Figur 4 dargestellt, ein Nulldurchgang 21 der Phase Φ an denjenigen Stellen, an denen die Amplitude signifikant über einer Rauschamplitude liegt, bestimmt, so dass sich ein Peak identifizieren lässt. Benachbarte Stützstellen der Phase können unter Kenntnis der Phasen-Steigung über die Laufzeit abgewickelt werden. Die Phasen-Steigung ist dabei durch den Schwerpunkt des Modulationsfrequenzspektrums f_{center} gegeben und somit bekannt (es gilt dΦ/dτ = -2π * f_{center}).

Durch Evaluierung des Laufzeitspektrums Lₘ können Abstände D zwischen dem Laserentfernungsmesser 1 und den mehreren Zielobjekten 15, 17 eindeutig und mit hoher Genauigkeit ermittelt werden.

## Patentansprüche

1. Laserentfernungsmesser (1) aufweisend:
eine Laserlichtquelle (5) zum Aussenden von zeitlich moduliertem Laserlicht (13) hin zu Zielobjekten (15, 17);
einen Lichtdetektor (7) zum Detektieren von durch Zielobjekte (15, 17) reflektiertem Laserlicht, wobei der Lichtdetektor (7) dazu ausgelegt ist, Laserlicht, welches mit Frequenzen im Bereich von 10 MHz bis 5 GHz, vorzugsweise 100 MHz bis 1,5 GHz moduliert ist, direkt synchron abzutasten;
eine Steuer- und Auswerteelektronik (9) zum Steuern der Laserlichtquelle (5) und zum Auswerten von Signalen des Lichtdetektors (7);
wobei
die Steuer- und Auswerteelektronik (9) dazu ausgelegt ist, folgende Verfahrensschritte auszuführen:
Ansteuern der Laserlichtquelle (5), um Laserlicht (13) nacheinander bei einer Vielzahl M von wenigstens 20, vorzugsweise wenigstens 100, diskret verschiedenen Modulationsfrequenzen fₘ (m = 1 ... M) auszusenden und
Detektieren von durch Zielobjekte (15, 17) reflektiertem Laserlicht durch direktes synchrones Abtasten eines Empfangssignals über eine Messzeitdauer Δt und Erzeugen eines Detektionssignals Iₘ bei jeder der Modulationsfrequenzen fₘ;
Durchführen einer inversen Fouriertransformation des Detektionssignals Iₘ, um ein Laufzeitspektrum Lₘ zu erzeugen;
Evaluieren des Laufzeitspektrums Lₘ bezüglich Amplitudenwerten, um wenigstens eine Entfernung D zwischen dem Laserentfernungsmesser (1) und wenigstens einem der Zielobjekte (15, 17) grob zu ermitteln, **dadurch gekennzeichnet, dass** die Bestimmung der Entfernung D durch Evaluieren des Laufzeitspektrums bezüglich Phasenwerten verfeinert erfolgt, indem ein Nulldurchgang (21) der Phasenwerte bestimmt wird.

2. Laserentfernungsmesser nach Anspruch 1, wobei beim Evaluieren des Laufzeitspektrums L mehrere Entfernungen zwischen dem Laserdistanzmesser (1) und jeweils einem von mehreren der Zielobjekte (15, 17) ermittelt werden, sodass eine Mehrzielfähigkeit ermöglicht wird.

3. Laserentfernungsmesser nach Anspruch 1 oder 2, wobei die Modulationsfrequenzen fₘ äquidistant beabstandet sind.

4. Laserentfernungsmesser nach einem der Ansprüche 1 bis 3, wobei bezüglich der Detektionssignale Iₘ eine digitale Filterung durchgeführt wird.

5. Laserentfernungsmesser nach einem der Ansprüche 1-4, wobei der Nulldurchgang (21) der Phasenwerte an Stellen des Laufzeitspektrums bestimmt wird, an denen die Amplitudenwerte in Form eines Peaks signifikant über einer Rauschamplitude liegen.

6. Laserentfernungsmesser nach einem der Ansprüche 1-5, wobei benachbarte Stützstellen der Phasenwerte unter Kenntnis einer Phasen-Steigung über eine Laufzeit abgewickelt werden.

7. Laserentfernungsmesser nach einem der Ansprüche 1 bis 6, wobei der Lichtdetektor (7) wenigstens eine Single Photon Avalanche Diode (SPAD) oder ein Array von SPADs aufweist.

8. Verfahren zum Betreiben eines Laserentfernungsmessers (1),
wobei der Laserentfernungsmesser (1) aufweist:
eine Laserlichtquelle (5) zum Aussenden von zeitlich moduliertem Laserlicht (13) hin zu Zielobjekten (15, 17);
einen Lichtdetektor (7) zum Detektieren von durch Zielobjekte (15, 17) reflektiertem Laserlicht, wobei der Lichtdetektor (7) dazu ausgelegt ist, Laserlicht (13), welches mit Frequenzen im Bereich von 10 MHz bis 5 GHz,
vorzugsweise 100 MHz bis 1,5 GHz moduliert ist, direkt synchron abzutasten;
eine Steuer- und Auswerteelektronik (9) zum Steuern der Laserlichtquelle (5) und zum Auswerten von Signalen des Lichtdetektors (7);
wobei das Verfahren folgende Verfahrensschritte umfasst:
Ansteuern der Laserlichtquelle (5), um Laserlicht (13) nacheinander bei einer Vielzahl M von wenigstens 20, vorzugsweise wenigstens 100, diskret verschiedenen Modulationsfrequenzen fₘ (m = 1 ... M) auszusenden und Detektieren von durch Zielobjekte (15, 17) reflektiertem Laserlicht durch direktes synchrones Abtasten über eine Messzeitdauer Δt und Erzeugen eines Detektionssignals Iₘ bei jeder der Modulationsfrequenzen fₘ;
Durchführen einer inversen Fouriertransformation des Detektionssignals Iₘ, um ein Laufzeitspektrum Lₘ zu erzeugen;
Evaluieren des Laufzeitspektrums Lₘ bezüglich Amplitudenwerten, um wenigstens eine Entfernung D zwischen dem Laserentfernungsmesser und wenigstens einem der Zielobjekte (15, 17) grob zu ermitteln, **dadurch gekennzeichnet, dass** die Entfernung D durch Evaluieren des Laufzeitspektrums bezüglich Phasenwerten verfeinert wird, indem ein Nulldurchgang (21) der Phasenwerte bestimmt wird.

9. Computerprogrammprodukt, welches maschinenlesbare Anweisungen
enthält, um einen programmierbaren Laserentfernungsmesser (1) nach einem der Ansprüche 1-7 dazu anzusteuern, das Verfahren gemäß Anspruch 8 durchzuführen.

10. Computerlesbares Medium, aufweisend ein darauf gespeichertes Computerprogrammprodukt gemäß Anspruch 9.

## Claims

1. Laser distance meter (1) comprising:
a laser light source (5) for emitting temporally modulated laser light (13) toward target objects (15, 17);
a light detector (7) for detecting laser light reflected by target objects (15, 17), wherein the light detector (7) is designed to directly synchronously sample laser light modulated with frequencies in the range of 10 MHz to 5 GHz, preferably 100 MHz to 1.5 GHz;
an electronic control and analysing unit (9) for controlling the laser light source (5) and for analysing signals of the light detector (7);
wherein
the electronic control and analysing unit (9) is designed to perform the following method steps:
driving the laser light source (5) in order to emit laser light (13) successively at a multiplicity M of at least 20, preferably at least 100, discretely different modulation frequencies fₘ (m = 1 ...M), and
detecting laser light reflected by target objects (15, 17) by directly synchronously sampling a reception signal over a measurement time duration Δt and generating a detection signal Iₘ for each of the modulation frequencies fₘ;
carrying out an inverse Fourier transform of the detection signal Iₘ in order to generate a propagation time spectrum Lₘ;
evaluating the propagation time spectrum Lₘ with regard to amplitude values in order to coarsely ascertain at least one distance D between the laser distance meter (1) and at least one of the target objects (15, 17), **characterized in that** the determination of the distance D by evaluating the propagation time spectrum with regard to phase values is refined by virtue of a zero crossing (21) of the phase values being determined.

2. Laser distance meter according to Claim 1, wherein a plurality of distances between the laser distance meter (1) and in each case one of a plurality of the target objects (15, 17) are ascertained when evaluating the propagation time spectrum L, with the result that a multi-target capability is enabled.

3. Laser distance meter according to Claim 1 or 2, wherein the modulation frequencies fₘ are equidistantly spaced.

4. Laser distance meter according to any one of Claims 1 to 3, wherein a digital filtering is carried out with regard to the detection signals Iₘ.

5. Laser distance meter according to any one of Claims 1-4, wherein the zero crossing (21) of the phase values is determined at points of the propagation time spectrum at which the amplitude values lie in the form of a peak significantly above a noise amplitude.

6. Laser distance meter according to any one of Claims 1-5, wherein adjacent support points of the phase values are developed with knowledge of a phase gradient over a propagation time.

7. Laser distance meter according to any one of Claims 1 to 6, wherein the light detector (7) comprises at least one single photon avalanche diode (SPAD) or an array of SPADs.

8. Method for operating a laser distance meter (1), wherein the laser distance meter (1) comprises:
a laser light source (5) for emitting temporally modulated laser light (13) toward target objects (15, 17);
a light detector (7) for detecting laser light reflected by target objects (15, 17), wherein the light detector (7) is designed to directly synchronously sample laser light (13) modulated with frequencies in the range of 10 MHz to 5 GHz, preferably 100 MHz to 1.5 GHz;
an electronic control and analysing unit (9) for controlling the laser light source (5) and for analysing signals of the light detector (7);
wherein the method comprises the following method steps:
driving the laser light source (5) in order to emit laser light (13) successively at a multiplicity M of at least 20, preferably at least 100, discretely different modulation frequencies fₘ (m = 1 ...M), and
detecting laser light reflected by target objects (15, 17) by directly synchronously sampling over a measurement time duration Δt and generating a detection signal Iₘ for each of the modulation frequencies fₘ;
carrying out an inverse Fourier transform of the detection signal Iₘ in order to generate a propagation time spectrum Lₘ;
evaluating the propagation time spectrum Lₘ with regard to amplitude values in order to coarsely ascertain at least one distance D between the laser distance meter and at least one of the target objects (15, 17), **characterized in that** the distance D from evaluating the propagation time spectrum with regard to phase values is refined by virtue of a zero crossing (21) of the phase values being determined.

9. Computer program product containing machine-readable instructions for driving a programmable laser distance meter (1) according to any one of Claims 1-7 to carry out the method according to Claim 8.

10. Computer-readable medium comprising a computer program product according to Claim 9 stored thereon.

## Revendications

1. Télémètre laser (1), présentant :
une source de lumière laser (5) servant à émettre de la lumière laser (13) modulée dans le temps vers des objets cibles (15, 17) ;
un photodétecteur (7) servant à détecter la lumière laser réfléchie par des objets cibles (15, 17), le photodétecteur (7) étant conçu pour balayer de manière directement synchrone de la lumière laser modulée à des fréquences dans la plage de 10 MHz à 5 GHz, de préférence de 100 MHz à 1,5 GHz ;
une électronique de commande et d'évaluation (9) servant à commander la source de lumière laser (5) et à évaluer des signaux du photodétecteur (7) ;
dans lequel
l'électronique de commande et d'évaluation (9) est conçue pour exécuter les étapes de procédé suivantes consistant à :
piloter la source de lumière laser (5) pour émettre de la lumière laser (13) successivement à une pluralité M d'au moins 20, de préférence d'au moins 100, fréquences de modulation fₘ (m = 1 ... M) différentes de manière discrète, et pour détecter de la lumière laser réfléchie par des objets cibles (15, 17) par un balayage synchrone direct d'un signal de réception sur une durée de mesure Δt, et pour générer un signal de détection Iₘ à chacune des fréquences de modulation fₘ ;
effectuer une transformation de Fourier inverse du signal de détection Iₘ afin de générer un spectre de temps de propagation Lₘ ;
évaluer le spectre de temps de propagation Lₘ quant à des valeurs d'amplitude afin d'établir approximativement au moins une distance D entre le télémètre laser (1) et au moins l'un des objets cibles (15, 17),
**caractérisé en ce que** la détermination de la distance D par l'évaluation du spectre de temps de propagation quant à des valeurs de phase est effectuée de manière affinée **en ce qu'**un passage par zéro (21) des valeurs de phase est déterminé.

2. Télémètre laser selon la revendication 1, dans lequel lors de l'évaluation du spectre de temps de propagation L, plusieurs distances entre le télémètre laser (1) et respectivement l'un parmi plusieurs des objets cibles (15, 17) sont établies de façon à permettre une capacité multi-cibles.

3. Télémètre laser selon la revendication 1 ou 2, dans lequel les fréquences de modulation fₘ sont espacées de manière équidistante.

4. Télémètre laser selon l'une quelconque des revendications 1 à 3, dans lequel un filtrage numérique est effectué concernant les signaux de détection Iₘ.

5. Télémètre laser selon l'une quelconque des revendications 1 à 4, dans lequel le passage par zéro (21) des valeurs de phase est déterminé à des endroits du spectre de temps de propagation où les valeurs d'amplitude se trouvent sous la forme d'un pic de manière significative au-dessus d'une amplitude de bruit.

6. Télémètre laser selon l'une quelconque des revendications 1 à 5, dans lequel des points de données voisins des valeurs de phase sont rectifiés connaissant une pente de phase pendant un temps de propagation.

7. Télémètre laser selon l'une quelconque des revendications 1 à 6, dans lequel le photodétecteur (7) présente au moins une diode à avalanche à photon unique (SPAD) ou un réseau de SPAD.

8. Procédé permettant de faire fonctionner un télémètre laser (1), le télémètre laser (1) présentant :
une source de lumière laser (5) servant à émettre de la lumière laser (13) modulée dans le temps vers des objets cibles (15, 17) ;
un photodétecteur (7) servant à détecter la lumière laser réfléchie par des objets cibles (15, 17), le photodétecteur (7) étant conçu pour balayer de manière directement synchrone de la lumière laser (13) modulée à des fréquences dans la plage de 10 MHz à 5 GHz, de préférence de 100 MHz à 1,5 GHz ;
une électronique de commande et d'évaluation (9) servant à commander la source de lumière laser (5) et à évaluer des signaux du photodétecteur (7) ;
le procédé comprenant les étapes de procédé suivantes :
piloter la source de lumière laser (5) pour émettre de la lumière laser (13) successivement à une pluralité M d'au moins 20, de préférence d'au moins 100, fréquences de modulation fₘ (m = 1 ... M) différentes de manière discrète, et pour détecter de la lumière laser réfléchie par des objets cibles (15, 17) par un balayage synchrone direct sur une durée de mesure Δt, et pour générer un signal de détection Iₘ à chacune des fréquences de modulation fₘ ;
effectuer une transformation de Fourier inverse du signal de détection Iₘ afin de générer un spectre de temps de propagation Lₘ ;
évaluer le spectre de temps de propagation Lₘ quant à des valeurs d'amplitude afin d'établir approximativement au moins une distance D entre le télémètre laser et au moins l'un des objets cibles (15, 17),
**caractérisé en ce que** la distance D est affinée par l'évaluation du spectre de temps de propagation quant à des valeurs de phase **en ce qu'**un passage par zéro (21) des valeurs de phase est déterminé.

9. Produit de programme informatique comportant des instructions lisibles par machine pour piloter un télémètre laser (1) programmable selon l'une quelconque des revendications 1 à 7 pour exécuter le procédé selon la revendication 8.

10. Support lisible par ordinateur, présentant un produit de programme informatique selon la revendication 9 stocké sur celui-ci.
